# FASCICULE DE BREVET EUROPEEN

(11) **EP 0 867 993 B1**
(45) Date de publication et mention de la délivrance du brevet: **21.04.2004**
(21) Numéro de dépôt: 98400443.2
(22) Date de dépôt: 24.02.1998
(51) Int. Cl.: H02B 1/20

(54) **Additif de câblage d'appareils électriques polyphasés**
Verkabelungszubehör für mehrphasige elektrische Geräte
Accessory for cabling of electrical multiphase apparatuses

(30) Priorité: 10.03.1997 FR 9702906
(43) Date de publication de la demande: 30.09.1998
(73) Titulaire: Schneider Electric Industries SAS, 92500 Rueil-Malmaison (FR)
(72) Inventeur: Gourdon, Jacques, 78500 Sartrouville (FR); Fosse, Philippe, 78800 Houilles (FR); Tanne, Michel, 95870 Bezons (FR)

(56) Documents cités:
- DE-U- 9 214 049
- FR-A- 2 598 027
- US-A- 3 536 868
- US-A- 5 274 918

## Description

La présente invention se rapporte à un additif servant à câbler deux appareils électriques à bornes et constitué d'une pluralité de conducteurs noyés dans un corps d'enrobage en matière plastique, les extrémités des conducteurs restant dénudées et s'embrochant dans les bornes des appareils.

Il est courant de réunir deux appareils électriques par des conducteurs pour réaliser des montages de base tels que: passage automatique de normal à secours, démarrage étoile-triangle, inversion du sens de marche. Cette liaison s'effectue par des câbles électriques souples ou par des barres conductrices plus rigides. On peut se référer par exemple au brevet US n° 3 536 868 qui montre l'utilisation de barres conductrices pour réunir deux contacteurs dans un montage inverseur. Les documents DE-U-32 14 049 et US-A-52 74 918 décrivent deux autres additifs de câblage selon l'art antérieur.

Le couplage par des câbles électriques souples est assez long à réaliser. Le couplage par des barres conductrices non protégées est dangereux. Il existe des barres dans lequel on trouve un seul conducteur apte à réunir plusieurs bornes et enrobé dans un enrobage plastique.

La présente invention a pour but de fournir un additif de câblage dans lequel on trouve plusieurs conducteurs enrobés dans un même enrobage plastique. Cet additif est notamment adapté à la réalisation de montages inverseurs et présente alors des conducteurs entrecroisés.

L'appareil est caractérisé par le fait que les différents conducteurs sont obtenus par découpe d'une plaque mince et qu'au moins un conducteur est composé de deux branches dont l'une est réunie par un assemblage à l'autre branche et croise un conducteur en restant éloigné et isolé de celui-ci par la matière d'enrobage.

Selon une caractéristique, l'additif est caractérisé par le fait qu'il comporte deux conducteurs qui sont composés l'un et l'autre de deux branches réunies par un assemblage.

L'invention va maintenant être décrite avec plus de détails en se référant à des modes de réalisation donnés à titre d'exemples et représentés par les dessins annexés sur lesquels :
- la figure 1 est une vue en perspective avant de deux contacteurs auxquels est associé l'additif de câblage selon l'invention;
- la figure 2 est une vue en élévation de l'additif tel qu'il se présente après enrobage;
- la figure 3 montre le jeu de conducteurs logés dans l'additif selon l'invention, sans l'enrobage et avant mise en place de celui-ci;
- la figure 4 montre un second jeu de conducteurs aptes à être logés dans l'additif selon l'invention, ce jeu étant adapté à une version « inverseur ».

L'additif selon l'invention, repéré 3, sert à réunir par des conducteurs les bornes de deux appareils électriques polyphasés (ici des contacteurs) 1 et 2. L'appareil 1 présente des entrées de bornes 11, 12, 13 séparées par des cloisons 14. De même l'appareil 2 présente des entrées de bornes 21, 22, 23 séparées par des cloisons 24.

L'additif se compose d'une pluralité de conducteurs 31, 32, 33 (autant que de phases à coupler) enrobés dans un corps d'enrobage 34 en matière plastique d'où sortent les extrémités dénudées de ces conducteurs. Ces extrémités dénudées forment des broches s'engageant des les entres de bornes.

Les différents conducteurs 31, 32, 33 sont pliés de manière que leurs extrémités dénudées soient sensiblement orthogonales au corps d'enrobage en plastique 34, lequel se place contre un côté des appareils lorsque l'additif est monté.

Le corps en matière plastique 34 forme un peigne dont chaque dent 35 enrobe un conducteur, en dehors d'une extrémité dénudée de celui-ci. Les extrémités dénudées des conducteurs sont saillantes par rapport aux bouts de dents. Ces dents ménagent entre elles des entailles 36 dans lesquelles se logent les cloisons 14 ou 24.

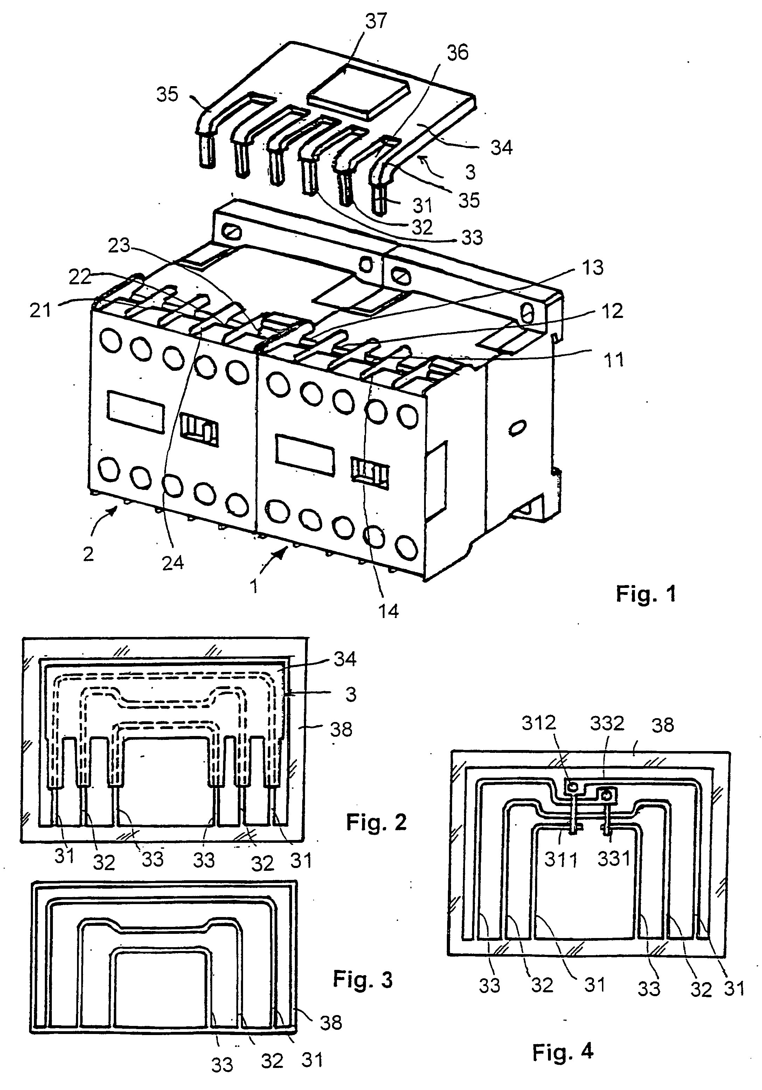

Dans le mode de réalisation de la figure 4, les conducteurs 31 et 32 d'une part et 33 et 32 d'autre part se croisent en restant éloignés. lls sont isolés entre eux par la matière d'enrobage du corps 34. Chaque conducteur 31 ou 33 se compose de deux branches. L'une des branches présente un tronçon replié 311 ou 331 respectivement qui croise le conducteur 32 et qui est réuni par un assemblage ou clinchage 312 ou 332 à l'autre branche.

Le corps en matière plastique (Fig. 1) présente un bossage 37 dans lequel se logent les parties de conducteurs qui s'entrecroisent.

Le procédé de fabrication de l'additif va maintenant être décrit.

Pour réaliser l'additif on prépare par découpage d'une plaque mince, une ébauche représentée aux figures 3 et 4, dans laquelle les conducteurs 31, 32, 33 sont attachés à un entourage périphérique 38. Cette ébauche est ensuite mise dans un moule de presse à injecter. La matière injectée vient enrober les conducteurs. Pour terminer on enlève l'entourage périphérique 38.

Il est bien entendu que l'on peut sans sortir du cadre de l'invention imaginer des variantes et des perfectionnements de détails et de même envisager l'emploi de moyens équivalents.

## Revendications

1. Additif de câblage d'appareils électriques polyphasés à bornes (1, 2), constitué d'une pluralité de conducteurs (31, 32, 33) noyés dans un corps d'enrobage (34) en matière plastique, les extrémités des conducteurs restant dénudées et s'embrochant dans les bornes (11, 12, 13, 21, 22, 23) des appareils, **caractérisé par le fait que** les différents conducteurs (31, 32, 33) sont obtenus par découpe d'une plaque mince et qu'au moins un conducteur (31, 33) est composé d'une branche et d'un tronçon replié (311, 331) réuni par un assemblage (312, 332) à une autre branche et croise un conducteur (32) en restant éloigné et isolé de celui-ci par la matière d'enrobage.

2. Additif selon la revendication 1, **caractérisé par le fait qu'**il comporte deux conducteurs (31, 33) qui sont composés l'un et l'autre de deux branches réunies par un assemblage (312, 332).

3. Additif selon l'une quelconque des revendications précédentes, **caractérisé par le fait que** le corps en matière plastique présente un bossage (37) dans lequel se logent les parties de conducteurs qui s'entrecroisent.

4. Procédé de fabrication de l'additif selon l'une quelconque de revendications précédentes, **caractérisé par le fait qu'**il consiste à réaliser par découpage dans une plaque mince une ébauche dans laquelle les conducteurs sont fixés à une entourage périphérique puis à enrober les conducteurs et finalement à enlever l'entourage périphérique.

## Patentansprüche

1. Zusatz zur Verbindung von mehrphasigen elektrischen Geräten mit Klemmen (1, 2), welcher aus einer Mehrzahl von Leitern (31, 32, 33) besteht, die in einem Ummantelungskörper aus Kunststoff eingelassen sind, wobei die Enden der Leiter abgemantelt bleiben und in die Klemmen (11, 12, 13, 21, 22, 23) der Geräte eingesteckt werden, **dadurch gekennzeichnet, dass** die verschiedenen Leiter (31, 32, 33) durch Ausstanzen in einer dünnen Platte erhalten werden und dass mindestens ein Leiter (31, 33) aus einem Zweig und einem abgebogenen Abschnitt (311, 331) besteht, welcher durch eine Montage (312, 332) mit einem anderen Zweig verbunden ist und einen Leiter (32) kreuzt, wobei er von dem letzteren durch den Ummantelungsstoff entfernt gehalten und isoliert ist.

2. Zusatz nach Anspruch 1, **dadurch gekennzeichnet, dass** er zwei Leiter (31, 33) umfasst, welche beide aus zwei durch eine Montage (312, 332) verbundenen Zweigen besteht.

3. Zusatz nach einem der vorangehenden Ansprüche, **dadurch gekennzeichnet, dass** der Kunststoffkörper einen Vorsprung (37) aufweist, in welchem die sich kreuzenden Teile der Leiter untergebracht sind.

4. Verfahren zur Herstellung des Zusatzes nach einem der vorangehenden Ansprüche, **dadurch gekennzeichnet, dass** es darin besteht, eine Ausgangsform in einer dünnen Platte durch Ausstanzen herzustellen, in welcher die Leiter an eine Randumgebung befestigt sind und dann die Leiter zu umwickeln und schließlich die Randumgebung zu entfernen.

## Claims

1. Wiring additive for multi-phased electrical equipment with terminals (1, 2) composed of a plurality of conductors (31, 32, 33) embedded in a plastic coating body (34), the ends of the conductor remaining stripped and being inserted in terminals (11, 12, 13, 21, 22, 23) of equipment, **characterised by** the fact that the different conductors (31, 32, 33) are obtained by cutting out a thin plate and in that at least one conductor (31, 33) is composed of a branch and a folded segment (311, 331) connected together by an assembly (312, 332) to another branch and crosses a conductor (32) keeping separated and isolated from it by the coating material.

2. Additive according to claim 1, **characterised by** the fact that it comprises two conductors (31, 33) that are each composed of two branches connected together by an assembly (312, 332).

3. Additive according to any one of the previous claims, **characterised by** the fact that the plastic body has a hump (37) in which the parts of the conductors that cross each other are housed.

4. Process for making the additive according to any one of the previous claims, **characterised by** the fact that it consists of cutting out a blank from a thin plate and the conductors are fixed in the blank to a peripheral surround, and then coating the conductors and finally removing the peripheral surround.
